(19) **Europäisches Patentamt**

**European Patent Office**

**Office européen des brevets**

(11) **EP 0 635 199 B1**

(12) **EUROPÄISCHE PATENTSCHRIFT**

(45) Veröffentlichungstag und Bekanntmachung des Hinweises auf die Patenterteilung:
**13.08.1997 Patentblatt 1997/33**

(51) Int. Cl.[6]: **A01G 3/025**, B25B 7/12, B25B 27/14, H01R 43/042

(21) Anmeldenummer: **94850130.9**

(22) Anmeldetag: **14.07.1994**

(54) **Gerät mit zwei Schenkeln und zwei Handgriffen**

Tool with two legs and two handles

Outil avec deux bras et deux poignées

(84) Benannte Vertragsstaaten:
**AT CH DE ES FR GB IT LI NL SE**

(30) Priorität: **19.07.1993 SE 9302452**

(43) Veröffentlichungstag der Anmeldung:
**25.01.1995 Patentblatt 1995/04**

(73) Patentinhaber: **Weidmüller Interface GmbH & Co.
D-32720 Detmold (DE)**

(72) Erfinder: **Pettersson, Lennart
S-162 34 Vällingby (SE)**

(74) Vertreter: **Klauber, Tomas
c/o Dr. Ludwig Brann Patentbyra AB,
Postfach 1344
752 43 Uppsala (SE)**

(56) Entgegenhaltungen:
**GB-A- 1 435 903     GB-A- 1 541 580**

# Beschreibung

Die Erfindung bezieht sich auf ein Gerät mit zwei Schenkein und zwei sie antreibenden Handgriffen, bei welchem die Schenkel um einen Schenkelschwenkpunkt und die Handgriffe um einen separaten, weiter vorne gelegenen Handgriffsschwenkpunkt verschwenkbar sind. Mit "Schenkel" werden in der vorliegenden Beschreibung und in den angeschloßenen Patentansprüchen die die Bearbeitungsorgane (z.B. Preßbakken) tragenden Glieder, auch Backenträger genannt, verstanden, und Ausdrücke wie "vorne", "vorderer" bzw. "rückwärts", "hinterer" u. dgl. beziehen sich auf die Richtung vom Vorderende der Schenkel zum Hinterende der Handgriffe.

Scherengeräte dieser Art sind bekannt, und bei einer in der US-A-3,372,478 beschriebenen Abschneideschere sind die beiden Handgriffe in ihren vordersten Teilen abgebogen und in einem Handgriffsschwenkpunkt zusammengelenkt. Die beiden Schenkel tragen an ihren vorderen Enden jeweils ein Schneiden- bzw. Amboßorgan, und sind an den entgegengesetzten Enden in einem hinter dem Handgriffsschwenkpunkt liegenden Schenkelschwenkpunkt zusammengelenkt. Die abgebogenen Teile der Handgriffe weisen kurze Verlängerungen jenseits des Handgriffsschwenkpunktes auf, mittels welcher sie an die Schenkel, etwa in deren halber Länge, angelenkt sind.

Zweck der Anordnung ist das Schneidenorgan und das Amboßorgan auch während der Arbeitsbewegung in einer gemeinsamen Ebene zu behalten.

Ein anderes Gerät der betreffenden Art ist eine in der US-A-2,528,816 beschriebene Heckenschere. Sie weist zwei längliche Schneidenorgane auf, von denen das eine an einem Schenkel angeordnet ist der mit einem der Handgriffe zu einer starren Einheit, einem Gerätekörper, zusammengefaßt ist, wobei das zweite Schneidenorgan an einem Schenkel angeordnet ist der in einem Schenkelschwenkpunkt mittels eines in einem länglichen Loch angeordneten Zapfens an den Gerätekörper angelenkt ist. Der zweite Handgriff ist in einem vor dem Schenkelschwenkpunkt liegenden Handgriffsschwenkpunkt an den Gerätekörper angelenkt.

Zweck der Anordnug ist eine begrenzte Längsverschiebung des angelenkten Schenkels zu ermöglichen. In beiden Fällen ist der gegenseitige Abstand der beiden Schwenkpunkte im Verhältnis zur Gesamtlänge des Gerätes sehr gering (ungef. 4% im ersten, und ungef. 13% im zweiten Fall) und die Frage der Parallelität oder Nichtparallelität der vorderen Schenkelenden bleibt unbeachtet.

Aus dem Stande Technik ist ferner bekannt bei Zangen eine gewiße Einstellmöglichkeit der Bearbeitungsorgane, z.B. Crimpstempel, und/oder einen Ausgleich fertigungsmäßiger Abweichungen dadurch zu erreichen, daß entweder der Zapfen welcher den Schenkelschwenkpunkt bildet ein exzentrisches Mittelteil aufweist, oder dadurch, daß der Schenkel von einem länglichen, an einem Ende offenen Schlitz in einen fest verankerten und einen abgefederten Teil aufgeteilt ist und das Bearbeitungsorgan am Ende des abgefederten Teiles angeordnet ist. Die letztgenannte Lösung ist z.B. in Fig. 1 in der genannten US-A-4,381,661 dargestellt.

Die vorliegende Erfindung bezieht sich nicht speziell auf Scherengeräte, sondern in erster Reihe auf Zangengeräte, und zwar derartige, bei denen parallele Lage der von den Schenkeln getragenen Bearbeitungsorgane (Arbeitsbacken) zumindest in der letzten Phase ihrer Annäherungsbewegung erforderlich ist.

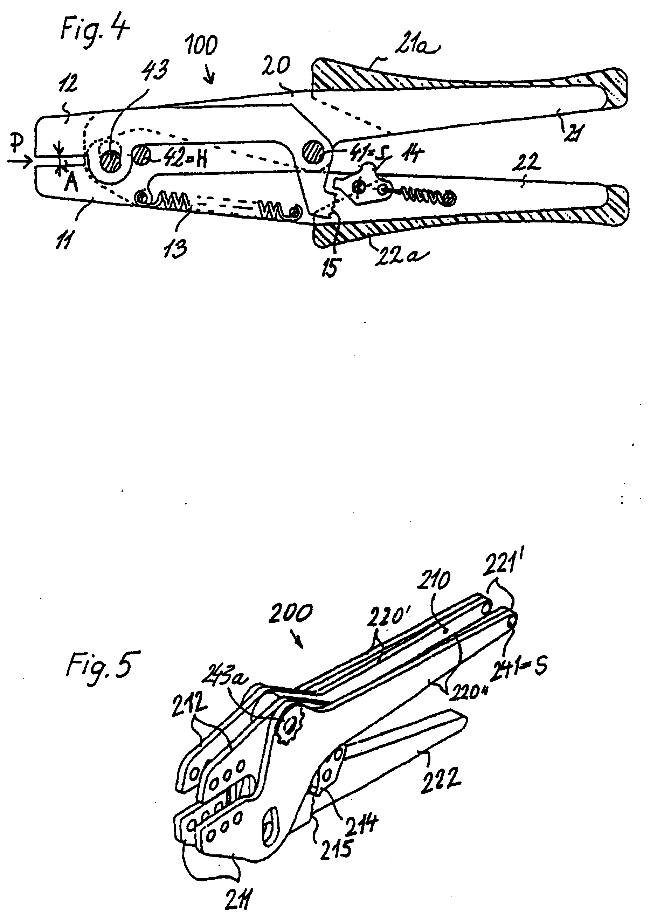

Im allgemeinen führen die Schenkel auch bei einer Zange eine scherenartige, also nicht-parallele Bewegung aus. In manchen Fällen, z.B. beim Vercrimpen von frontal eingeführten Kabelschuhen auf elektrische Leiter, wird jedoch die genannte Parallellage gefordert. Unter Frontaleinführung wird verstanden daß der Arbeitsgegenstand in Längsrichtung der Zange in die Bearbeitungsorgane eingeführt wird (Pfeil P in Fig. 4). Ausgesprochen unparallele Lage der Crimpstanzen in der Schlußphase der Arbeitsbewegung der Schenkel würde zur Folge haben, daß der betreffende Kabelshuh ungleichmäßig vercrimpt wird, nämlich kräftiger am äußeren als am inneren Ende, und somit einen keilförmigen Längsschnitt erhält.

Mehrere Konstruktionen von diesen Nachteil beseitigenden so genannten Parallelzangen sind bekannt, bei welchen parallele Bewegung der Schenkel z.B. mit Hilfe einer Parallelogrammführung, durch schraubstockartig gleitende Anordnung des eines Schenkels bzw. der einen Backe (wie z.B. in der US-A-4,381,661 der Anmelderin in Fig. 5 dargestellt), oder mittels schwenkbarer Anordnung der eigentlichen Arbeitsbacken an den Schenkeln (wie z.B. in Fig. 7 der genannten US-A-4,381,661 dargestellt) erreicht wird.

Allen vorbekannten Parallelzangen ist gemeinsam, daß ihre Konstruktion eine größere Anzahl von Teilen erfordert als was bei Zangen mit scherenartiger Bewegung der Fall ist.

Die Forderung der Parallelität gilt jedoch bloß für die Endphase der Annäherungsbewung, wenn die Arbeitsbacken in Eingriff mit dem Arbeitsgegenstand gelangen, und in der Praxis ist in vielen Fällen, Z.B. beim oben genannten Vercrimpen, nicht haargenaue Parallelität der Arbeitsbacken erforderlich, sondern angenäherte Parallelität - Quasiparallelität - ist voll zureichend.

Wenn man bei einer herkömmlichen, nach dem Scherenprinzip arbeitenden Zange die Schenkel zureichend verlängern würde, erhielte man eine quasiparallele Bewegung der die Arbeitsbacken tragenden vorderen Schenkelenden, die in vielen Fällen den Anforderungen der Praxis genügen würde. Diese Lösung wäre jedoch mit dem Nachteil behaftet, daß solche Zangen bedeutend länger, und somit bedeutend minder handlich, als die vorbekannten Parallelzangen wären.

Es wurde bereits ein mit einer Hand bedienbares Handgerät vorgeschlagen (GB-A-1 435 903) das zwei Schenkel, die um einen Schenkelschwenkpunkt, und zwei sie antreibende Handgriffe, die um einen Handgriffsschwenkpunkt zu- und voneinander verschwenkbar sind, aufweist, wobei der Schenkelschwenktpunkt in bedeutendem Abstand hinter dem Handgriffsschwenkpunkt am hinteren Ende des Handgriffes gelegen ist, so daß in der Endphase der Zueinanderbewegung der Schenkel eine parallele Lage erreicht wird.

Die vorliegende Erfindung stellt sich die Aufgabe mit Ausgangpunkt in dem genannten Handgerät eine insbesondere zum Vercrimpen von frontal eingeführten Kabelschuhen geeignete Zange zu schaffen, die eine auch für viele Anwendungszwecke in der Praxis zureichende quasiparalleler Lage der vorderen Schenkelenden in der Schlußphase der Schließbewegung aufweist, ohne daß hierbei die Gesamtlänge des Gerätes im wesentlichen größer als bei herkömmlichen Zangen mit scherenartiger Bewegung der Schenkel wäre. Auch die Gesamtanzahl der Komponenten soll hierbei im wesentlichen nicht größer als bei den herkömmlichen Zangen mit scherenartiger Bewegung und jedenfalls kleiner als bei vorbekannten Parallelzangen, sein.

Die Erfindung ist durch die in den angeschloßenen Patentansprüchen angeführten Merkmale gekennzeichnet, und soll nun anhand von Ausführungsbeispielen gemäss den angeschloßenen Zeichnungen näher erklärt werden. In den Zeichnungen zeigen

Fig. 1 eine Seitenansicht einer ersten Ausführungsform der erfindugsgemäßen Zange,
Fig. 2 eine Draufsicht auf die Zange gemäß Fig. 1,
Fig. 3 die einzelnen Konstruktionsteile der Zange gemäß Fig. 1 und 2 in Seitenansicht,
Fig. 4 einen Längsschnitt durch diese Zange,
Fig. 5 eine Perspektivdarstellung einer zweiten Ausführungsform der erfindungsgemäßen Zange in geschloßenem Zustand, und
Fig. 6 einen Längsschnitt durch die Zange gemäß Fig. 5 in geöffnetem Zustand.

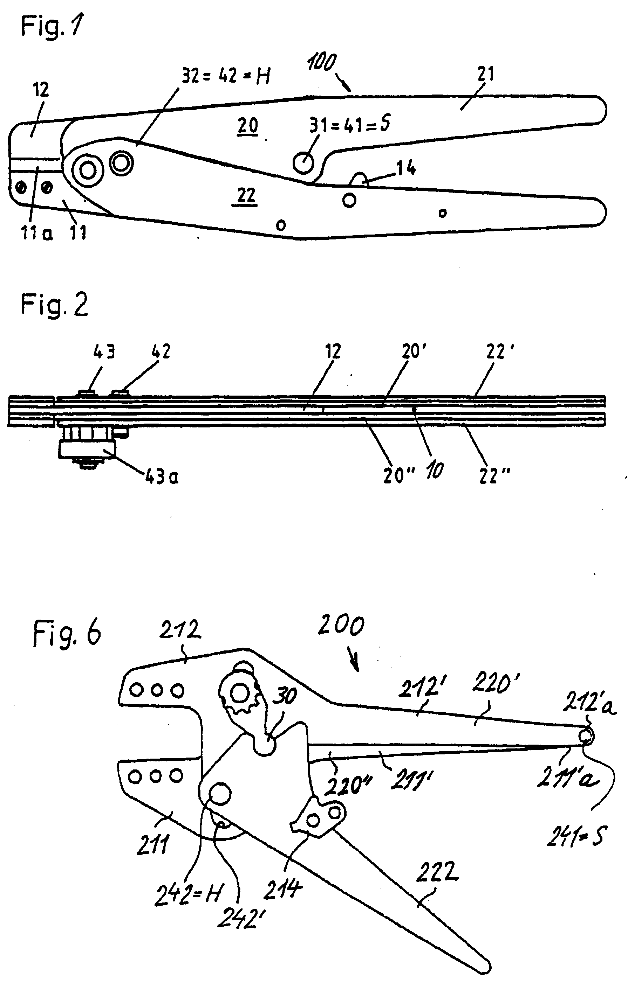

Gemäß Fig. 1-4 weist eine Crimpzange 100 einen ersten Schenkel 11 und einen ersten Handgriff 21 auf, die zu einem Gerätekörper 20 starr zusammengefaßt sind. An diesen Gerätekörper 20 ist ein zweiter Schenkel 12 mittels eines Schwenkzapfens 41, und ein zweiter Handgriff 22 mittels eines Schwenkzapfens 42, angelenkt.

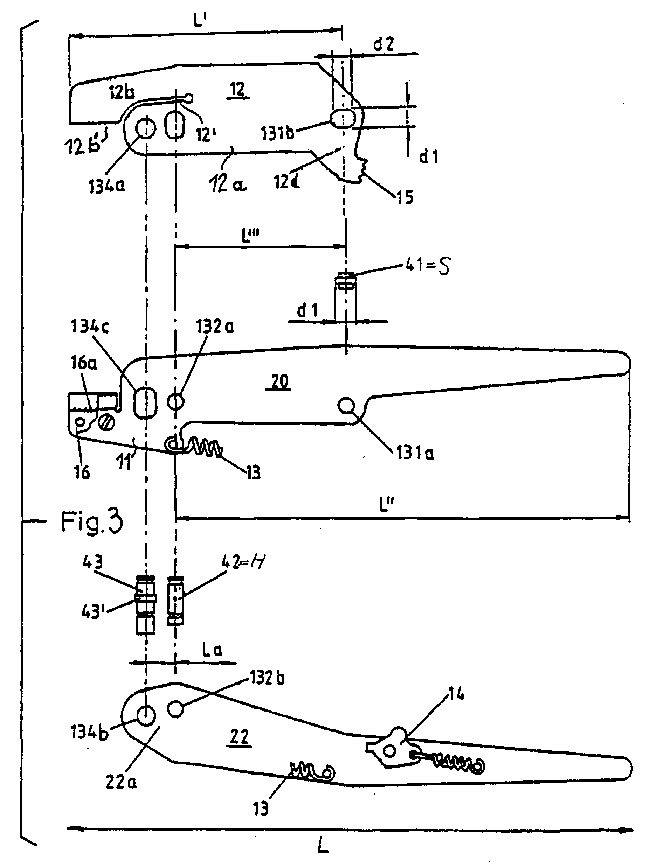

Der Schwenkzapfen 41 bildet den Schenkelschwenkpunkt S (Fig. 4) und der Schwenkzapfen 42 den Handgriffsschwenkpunkt H des Gerätes 100. Der Schwenkzapfen 41 ist in einer Öffnung 131a (Fig. 3) und der Schwenkzapfen 42 in einer Öffnung 132a im Gerätekörper 20 gelagert, wobei sich der Schenkelschwenkpunkt S bzw. Schenkelschwenkzapfen 41 um den Abstand L''' (Fig. 3) hinter dem Handgriffsschwenkpunkt H bzw. -schwenkzapfen 43 befindet. Der Abstand L''' ist der Abstand, in dem sich die Länge L' der Schenkel mit der Länge L'' der Handgriffe überlappt, und ist vorzugsweise zumindest einem Drittel der Gesamtlänge L des Gerätes gleich ( $L = L' + L'' - L'''$ ).

Der zweite Schenkel 12 weist eine Öffnung 131b auf durch die der Zapfen 41 hindurch gehen kann. Der Geräterkörper 20 umfaßt in an sich bekannter Weise zwei parallel im Abstand 10 voneinander angeordneten Seitenplatten 20', 20'' (Fig. 2), zwischen denen der aus einer einzigen Platte bestehende zweite Schenkel 12 angeordnet ist.

Auch der zweite Handgriff 22 kann aus zwei Seitenplatten 22', 22'' bestehen, welche entlang der äußeren Flächen der Seitenplatten 20' 20'' des Gerätekörpers 20 angeordnet sind. Beide Handgriffe 21, 22 sind in an sich bekannter Weise mit Überzügen 21a, 22a versehen, die Übersichtlichkeits halber nur in Fig. 4 dargestellt sind.

Der zweite Handgriff 22 ist mit einer Öffnung 132b für den Zapfen 42 versehen und weist jenseits dieser Öffnung 132b eine nach vorwärts sich streckende Verlängerung 22a auf (Fig. 3), die im Abstand $L_a$ vor der Öffnung 132b eine Öffnung 134b für einen Zapfen 43 aufweist, der dem Anschluß an den zweiten Schenkel 12 dient. Der Zapfen 43 ist im zweiten Schenkel 12 in der Öffnung 134a angeordnet und geht durch eine Öffnung 134c in der Gerätekörpereinheit 20 hindurch. Die Öffnung 134c ist in Richtung senkrecht zur Längsrichtung des Gerätekörpers 20 langgestreckt, bzw. weist solche Abmeßungen auf, daß der Zapfen 43 in allen Schwenklagen des zweiten Schenkels 12 und des zweiten Handgriffes 22 ungestört hindurchgehen kann.

Der Zapfen 43 kann in an sich bekannter Weise einen exzentrischen Mittelteil 43' aufweisen, der sich im zusammengesetzten Zustand des Gerätes 100 in der Öffnung 134a befindet, so daß durch Wahl der Drehlage des Zapfens 43 mit nachfolgendem Fixieren durch eine an sich bekannte, nur in Fig. 2 dargestellte Fixieranordnung 43a die Lage des zweiten Schenkels 12 gegenüber dem Gerätekörper 20 nachjustiert werden kann.

Alternativ kann der zweite Schenkel 12 in an sich bekannter Weise einen länglichen, an einem Ende offenen Schlitz 12' aufweisen, der den Schenkel 12 in einen ersten Teil 12a und einen zweiten Teil 12b teilt. Im ersten Teil 12a befindet sich die Öffnung 134a, und am Ende des zweiten Teiles 12b ist ein Bearbeitungsorgan, z.B. eine Crimpstanze 12b', angeordnet. Die Teile 12a, 12b sind so bemeßen, bzw. der Schlitz 12' ist so angeordnet, daS der Teil 12b gegenüber dem Teil 12a abgefedert ist, wodurch eine (automatische) Nachjustiermöglichkeit erreicht wird, analog derjenigen welche durch Änderung der Drehlage eines mit einem exzentrischen Mittelteil versehenen Zapfens erzielt wird. In der Regel genügt es zwecks Nachjustieren entweder die eine oder die andere der beschriebenen Vorkehrungen zu treffen.

Die Öffnung 131b im zweiten Schenkel 12 ist länglich ($d_2$) in Längsrichtung des Schenkels um unbehindertes Zusammenwirken zwischen diesem Schenkel 12, dem Gerätekörper 20 und dem Handgriff 22 in allen gegenseitigen Schwenklagen zu ermöglichen. In der zur Längsrichtung des Schenkels senkrechten Richtung $d_1$ hat die Öffnung 131b die gleiche Abmeßung wie der Zapfen 41. Die Werte für $d_1$ und $d_2$ können z.B. 6 und 7 mm betragen.

Alternativ kann zum gleichen Zwecke eine der Öffnungen 134a im Schenkel 12, oder 134b im zweiten Handgriff 22, durch die der Zapfen 43 hindurchgeht, oder die Öffnung 131a im Gerätekörper 20, durch die der Zapfen 41 hindurchgeht, auf angegebene Weise länglich gestaltet sein. Die Öffnung 134c im Gerätekörper 20 ist in jedem Fall auch in Längsrichtung des Gerätekörpers 20 größer als der Durchmeßer des Zapfens 43.

Zusammenfaßend kann festgestellt werden, daß der Zapfen im Anschlußpunkt des zweiten Handgriffes 22 an den Gerätekörper 20, oder der Zapfen im Schenkelschwenkpunkt S begrenzte Bewegungsfreiheit in Längsrichtung des Schenkels aufweisen soll.

Die Bearbeitungsorgane wie Crimpstanzen od. dgl. können von einem separaten, vorzugsweise austauschbar montierten Glied, wie einer Einlegeplatte 16 mit einer Arbeitsfläche 16a, gebildet sein, wie dies beim ersten Schenkel 11 dargestellt ist.

Die Zange 100 ist eine Crimpzange mit Fronteinführung, d.h. eine Zange in die der Arbeitsgegenstand in ihrer Längsrichtung eingeführt wird (Pfeil P in Fig. 4). Ausgesprochen unparallele Lage der Crimpstanzen 12b', 16a in der Schlußphase der Arbeitsbewegung des zweiten Schenkels 12 würde zur Folge haben, daß der betreffende Kabelshuh ungleichmäßig vercrimpt wird, kräftiger am äußeren als am inneren Ende.

Die Einlegeplatte 16 ist zwischen den vorderen Teilen der beiden Seitenplatten 20', 20" festgeschraubt, und diese vorderen Teile sind an ihren dem zweiten Schenkel 12 zugewandten Kantenpartien 11a V-förmig nach außen ausgebogen um den Arbeitsgegenstand auf die Arbeitsfläche 16a der Einlegeplatte 16 zu führen.

Vorzugsweise können hierbei die zusammenarbeitenden Crimpflächen so angeordnet sein, daß sie die genau parallele Lage weder in der voll geöffneten, noch in der voll geschloßenene Lage der Schenkel 11, 12 einnehmen, sondern in der z.B. in Fig.4 dargestellten etwas geöffneten Lage, wo ihr gegenseitiger Abstand A einem erwarteten Mittelwert, z.B. 3 mm, des Druchmeßers der meisten Arbeitsgegenstände entspricht.

Auch ohne diese Vorkehrung wird jedoch mit der erfindungsgemäßen Zange ein zufriedenstellendes Resultat erreicht, wie aus folgendem Vergleich ersichtlich sein dürfte.

Bei einer herkömmlichen Zange mit dem Aussehen gemäß Fig. 1 und dem Schenkelschwenkpunkt in 32 würden die Schenkel bei dem genannten Öffnen von ungefähr 3 mm einen Winkel von etwa 20° miteinander einschließen. Bei der erfindungsgemäßen Zange 100 schließen sie einen Winkel von etwa 3° ein, was ein Grad von Parallelität ist der innerhalb der Toleranzgrenzen bei der Fertigung der herkömmlichen, komplizierten Parallelzangen liegt. Hierbei weist die erfindungsgemäße Zange nicht mehr als die drei in Fig. 3 dargestellten Hauptbestandteile auf.

Die Zange 100 ist in an sich bekannter Weise mit einer im Gerätekörper 20 und am zweiten Handgriff 22 verankerten Zugfeder 13 (Fig. 4) versehen, die nach Beendung einer Arbeitsoperation den zweiten Handgriff 22 zurück in die geöffnete Lage bringt, sowie mit einem Sperrmechanismus der vorzeitiges Öffnen in der Endphase einer Arbeitsoperation verhindert.

Dieser Sperrmechanismus weist einen im zweiten Handgriff 22 drehbar gelagerten und federbelasteten Sperrhaken 14 auf, der mit einer Zahnreihe 15 eingreift die am zweiten Schenkel 12 im wesentlichen winkelrecht zu dessen Längsrichtung angeordnet ist.

In Fig. 5 und 6 ist eine zweite Ausführungsform der erfindunggemäßen Zange 200 dargestellt, wobei Bestandteile, die denen der Zange 100 entsprechen, mit um 200 vergrößerten Bezugszeichen bezeichnet sind. Beide Schenkel 211, 212, an deren freien vorderen Enden die Bearbeitungsorgane anzuordnen sind, weisen einen starr angeschlossenen (einstückig hergestellten), nach rückwärts sich erstreckenden, stielförmigen Ausläufer 211', 212' (Fig. 6) auf, der im wesentlichen gleich lang wie ein herkömmlicher Gerätenhandgriff ist. Die beiden Schenkel wurden somit zu je einem Paar von zusammenarbeitenden Paaren von Gerätekörpereinheiten umgewandelt, wobei jedoch die Handgriffsteile, d.h. die Ausläufer 211', 212' beider Paare zusammen den ersten Handgriff 221 des Gerätes darstellen.

Der zweite Handgriff 222 ist mittels eines Zapfens 242 an die erste Gerätekörpereinheit 220' angelenkt. Der Zapfen 242, der durch eine längliche Öffnung 242' in der zweiten Gerätekörpereinheit 220" hindurchgeht, bildet den Handgriffsschwenkpunkt H des Gerätes 200 und befindet sich im Übergangsgebiet zwischen dem Schenkelteil und dem Handgriffsteil der Einheit 220'.

Die beiden Handgriffsausläufer 211', 212' sind an ihren freien hinteren Enden 211'a, 212'a von je einem Zapfen 241 zusammengelenkt, der den Schenkelschwenkpunkt S des Gerätes 200 bildet.

Bewegung und Kraft werden vom zweiten Handgriff 222 an die zweite Gerätekörpereinheit 220" mittels eines als "flaches Kugelgelenk" bekannten Mechanismus 30 übertragen, so daß die Einheit 220 um den Schenkelschwenkpunkt (S) herum verschenkt wird.

Im dargestellten Ausführungsbeispiel wird somit nicht ein Paar von Gerätekörpern, sonder zwei, je eine Gerätekörpereinheit 220', 220" bildende Paare zusammenarbeitender, parallel im Abstand von einander angeordneter Gerätekörper angewandt. Dadurch entsteht zwischen beiden Schenkelpartien 211, 212 in beiden Paaren der freie Raum 10, in dem die Bearbeitungsorgane untergebracht werden können, gleich wie zwischen den beiden Seitenplatten 20', 20" des Gerätes 100 gemäß Fig. 2.

Bei der Zange 200 ist, im Vergleich mit Fig. 2, die überlappende Länge L''' gleich der ganzen Handgriffslänge L''.

## Patentansprüche

1. Zangengerät (100, 200), insbesondere Crimpzange mit Fronteinführung (P), mit zwei in einem Schenkelschwenkpunkt (S) schwenkbar verbundenen Schenkeln bzw. Schenkelteilen (11, 12; 211, 212), deren Endteile gestaltet sind ein Bearbeitungsorgan (12b') zu tragen, und mit zwei die Schenkel bzw. Schenkelteile (11, 12; 211, 212) antreibenden, in einem Handgriffsschwenkpunkt (H) zusammengelenkten Handgriffen bzw. Handgriffsteilen (21, 22, 221, 222), wobei jeder Schenkel bzw. Schenkelteil (11, 12; 211, 212) einen jenseits des Handgriffsschwenkpunktes (H) sich erstreckenden Ausläufer (12a) aufweist, und der erste Schenkelteil (11, 211) mit dem ersten Handgriffsteil (21, 221) zu einem starren Gerätekörper (20, 220) vereint sind, an den der zweite Handgriff (22, 222) im Handgriffsschwenkpunkt (H), der um bedeutenden Abstand (L''') vom Schenkelschwenkpunkt (S) entfernt ist, angelenkt ist, so daß die beiden Schenkel bzw. Schenkelteile (11, 12; 211, 212) in der Schlußphase einer Annäherungsbewegung quasiparallele Lage einnehmen, und wobei ein Mechanismus (30) vorgesehen ist, μm die Bewegung und Kraft vom zweiten Handgriff (22, 222) an den zweiten Schenkel bzw. Schenkelteil zu übertragen, **dadurch gekennzeichnet**, daß es zwei im Abstand (10, 210) voneinander parallel angeordnete Gerätekörpereinheiten (20', 20''; 220', 220'') aufweist, von denen jede einen von einer Seitenplatte gebildeten Gerätekörper (20) aufweist, daß in dem zwischen den Gerätekörpereinheiten (20', 20''; 220', 220'') zufolge des genannten Abstandes (10, 210) entstandenen freien Raum (10, 210) das Bearbeitungsorgan (12b') zusammen mit zumindest einem der Bauteile: zweiter Schenkel (12), zweiter Handgriff (222), Mechanismus (30) zur Übertragung von Kraft und Bewegung angeordnet ist, und daß in zumindest einer der Gerätekörpereinheiten eine Öffnung (134c, 242') mit solchen Abmeßungen senkrecht zur Längsrichtung des Gerätekörpers vorgesehen ist, daß ein im zweiten Handgriff (22, 222) verankerter Zapfen (43, 242) in allen Schwenklagen dieses Handgriffes ungestört hindurchgehen kann.

2. Gerät nach Anspruch 1, **dadurch gekennzeichnet**, daß der genannte Mechanismus von einem Zapfen (43) gebildet ist der den zweiten Handgriff (22, 222) unmittelbar mit dem zweiten Schenkel bzw. Schenkelteil (12) verbindet.

3. Gerät nach Anspruch 1 oder 2, **dadurch gekennzeichnet**, daß es mit einer Anordnung zum Nachjustieren der Lage eines Schenkels oder Schenkelteiles (212) versehen ist.

4. Gerät nach Anspruch 3, **dadurch gekennzeichnet**, daß ein durch einen Schenkel oder Schenkelteil hindurchgehender Zapfen, so wie der Zapfen (43) welcher den genannten Mechanismus bildet, einen exzentrischen Mittelteil (43') aufweist und daß eine Fixieranordnung (43a) vorgesehen ist die Drehlage dieses Zapfens zu fixieren.

5. Gerät nach Anspruch 3, **dadurch gekennzeichnet**, daß der zweite Schenkel (12) in an sich bekannter Weise von einem länglichen, an einem Ende offenen Schlitz (12') in zwei Teile (12a, 12b) geteilt ist, von denen der eine (12b) abgefedert ist und das Bearbeitungsorgan trägt, und am zweiten (12a) sich die Anschluß-Stelle (134a) an den zweiten Handgriff (22) befindet.

6. Gerät nach einem oder mehreren der vorhergehenden Ansprüche, bei dem jede Gerätekörpereinheit aus einem einzigen Gerätekörper besteht und der zweite Schenkel (12) im genannten freien Raum (10) angeordnet ist, **dadurch gekennzeichnet**, daß der zweite Handgriff (22) aus zwei Seitenplatten (22', 22'') besteht, und diese entlang der äußeren Flächen der die Gerätekörper bildenden Seitenplatten angeordnet sind.

7. Gerät nach einem oder mehreren der vorangehenden Ansprüche, **dadurch gekennzeichnet**, daß zwecks unbehinderten Zusammnewirkens der Bauteile: zweiter Schenkel (12), Gerätekörper (20), zweiter Handgriff (22) in allen gegenseitigen Schwenklagen, eine der Öffnungen (131a, 131b, 134a, 134b) durch welche der Zapfen (42, 242) im Anschlußpunkt (H) des zweiten Handgriffes (22, 222) und/oder der Zapfen (41) im Schenkelschwenkpunkt (S) hindurchgeht, länglich ist.

8. Gerät nach einem oder mehreren der Ansprüche 1-5 mit Gerätekörpereinheiten (220', 220'') die je zwei Gerätekörper aufweisen und mit im freien Raum zwischen ihnen angeordnetem zweiten Handgriff (222) und Mechanismus zur Übertragung von Kraft und Bewegung, **dadurch gekennzeichnet**, daß in jeder Gerätekörpereinheit (220', 220'') ein Gerätekörper den ersten Schenkelteil (211) und einen stielförmigen Ausläufer (211'), und der zweite Gerätekörper den zweiten Schenkelteil (212) und einen stielförmigen Ausläufer (212') aufweist, wobei die Ausläufer beider Gerätekörper in einer Gerätekörpereinheit an ihren freien hinteren Enden (211'a, 212'a) mittels eines den Schenkelschwenkpunkt (S) bildenden Zapfens (241) zusammengelenkt sind, und alle Ausläufer in beiden Gerätekörpereinheiten den ersten Handgriff (221) des Gerätes (200) bilden.

9. Gerät nach Anspruch 8, **dadurch gekennzeichnet**, daß der genannte Mechanismus (30) ein so genanntes flaches Kugelgelenk umfaßt.

**10.** Gerät nach einem oder mehreren der vorangehenden Ansprüche, **dadurch gekennzeichnet**, daß die Schenkel bzw. Schenkelteile derart angeordnet sind, daß einander zugekehrten Arbeitsflächen der im ersten Schenkelteil und im zweiten Schenkel oder Schenkleteil angeordneten Bearbeitungsorgane (12b', 16a) in gewähltem gegenseitigem Abstand (A), der einem erwarteten Mittelwert der Größe der Arbeitsgegenstände entspricht und größer als Null und kleiner als der maximale gegenseitige Abstand ist, genau parallel miteinander verlaufen.

**Claims**

**1.** Pliers-type tool (100, 200), in particular a pair of crimping pliers with frontal input (P), and having two shanks or shank members (11, 12; 211, 212) which are pivoted one to another in a shank fulcrum (S), and the terminal portions of which are adapted to carry an operative menas (12b'), and with two handles or handle members (21, 22; 221, 222) which drive the shanks or shank members (11, 12; 211, 212) and are pivoted one to another in a handles fulcrum (H), each shank or shank member (11, 12; 211, 212) having an extension (12a) extending beyond the handles fulcrum (H), and the first shank member (11, 211) being with the first handle member (21, 211) consolidated to a rigid tool body (20, 220) to which the second handle (22, 222) is pivoted in the handles fulcrum (H) which lies at a substantial distance (L''') away from the shanks fulcrum (S), so that the two shanks or shank members (11, 12; 211, 212) in the final phase of an approachment movement occupy a near-parallel position, a mechanism (30) being provided to transfer motion and force from the second handle (22, 222) to the second shank or shank member, **characterized by** having two parallel and spaced (10, 210) tool body units (20', 20''; 220', 220''), each of them comprising a tool body (20) embodied by a side plate, the operative means (12b') being together with at least one of the components: the second shank (12), the second handle (222), and the mechanism (30) for the transmission of force and motion located in a free space (10, 210) come about between the tool bodies (20', 20''; 220', 220'') due to the above said spacement (10, 210), in at least one of the tool body units being provided an opening (134c, 242') with such dimensions at right angles to the length direction of the tool body that a pin (43, 242) anchored in the second handle (22, 222) may in all swing positions of the said handle unimpededly pass through the opening.

**2.** The tool of claim 1 , **characterized** in said mechanism being defined by a pin (43) which directly connectes the second handle (22, 222) with the second shank or shank member (12).

**3.** The tool of claim 1 or 2, **characterized** by being provided with a device for re-setting of the position of a shank or shank member (212).

**4.** The tool of claim 3, **characterized** by a pin which passes through a shank or shank member, such as the pin (43) defining the said mechanism, having an excentrical centre portion (43'), and a fixing device (43a) being provided for fixing the rotational position of this pin.

**5.** The tool of claim 3, **characterized** in the second shank (12) being in **per se** known manner divided in two parts (12a, 12b) by a longitudinal slot (12') which is open at one end, one (12b) of these parts being sprung and carrying the operative menas, and on the other part (12a) being located the point of attachment to the second handle (22).

**6.** Tool according to one or more of the preceding claims, wherein each tool body unit consists of a single tool body, and the second shank (12) is disposed in said free space (10), **characterized** by the second handle (22) being embodied by two side plates (22', 22'') arranged alongside the side plates which constitute the outer faces of the tool body.

**7.** Tool according to one or more of the preceding claims, **characterized** by one of the openings (131a, 131b, 134a, 134b) through which the pin (42, 242) in the point of attachment (H) of the second handle (22, 222), and/or the pin (41) in the fulcrum (S) of the shanks passes, is longitudinal so as to allow, in all relative swing positions, unimpeded co-operation of the components: the second shank (12), the tool body (20), and the second handle (22).

**8.** Tool according to one or more of the claims 1 to 5 with tool body units (220', 220'') which each has two tool bodies, and in which the second handle (222) and the mechanism for transmission of force and motion is located in the free space between the tool bodies, **characterized** in that in each tool body unit (220', 220'') one tool body embodies the first shank member (211) and a rod-shaped extension (212'), and the second tool body embodies the second shank member (212) and a rod-shaped extension (212'), the extensions in both tool bodies of one tool body unit being at their free rear ends (211'a, 212'a) pivoted one to another with the aid of a pin (241) which embodies the shanks fulcrum (S), and all extensions in both tool body units defining the first handle (221) of the tool (200).

**9.** The tool of claim 8, **characterized** by the said mechanism being embodiedby a so called flat ball-and-socket joint.

10. Tool according to one or more of the preceding claims, **characterized** by the shanks or shank members being disposed so that the operative faces of the operative menas (12b', 16a) mounted in the first shank member and in the second shank or shank member extend exactly parallel when they are at a selected distance (A) which corresponds to an expected medium value of the size of the work pieces, being larger than zero and smaller than the maximum spacement of the shank members.

**Revendications**

1. Pince (100, 200), en particulier pince de sertissage à introduction frontale (P), comportant deux branches ou éléments de branches (11, 12 ; 211, 212) relié(e)s de façon pivotante au niveau d'un point d'articulation (S) de branches et dont les parties terminales sont conçues pour supporter un organe de travail (12b'), et comportant deux poignées ou éléments de poignées (21, 22 ; 221, 222) articulé(e)s au niveau d'un point de pivotement (H) de poignées et actionnant les branches ou éléments de branches (11, 12 ; 211, 212), chaque branche ou élément de branche (11, 12 ; 211, 212) présentant un bras (12a) s'étendant au-delà du point d'articulation (H) des poignées et le premier élément de branche (11 ; 211) étant relié au premier élément de poignée (21 ; 221) pour former un corps d'outil (20 ; 220) rigide sur lequel la deuxième poignée (22 ; 222) est articulée au niveau du point de pivotement (H) de poignées qui se trouve à une distance (L''') importante du point de pivotement (S) des branches de sorte que les deux branches ou éléments de branches (11, 12 ; 211, 212) adoptent une position quasiment parallèle dans la phase terminale d'un mouvement de rapprochement, et un mécanisme (30) étant prévu pour transmettre le mouvement et la force de la deuxième poignée (22 ; 222) à la deuxième branche ou au deuxième élément de branche, **caractérisée** en ce qu'elle comporte deux unités de corps d'outil (20', 20'' ; 220', 220'') disposées parallèlement à un écartement (10 ; 210) l'une de l'autre et dont chacune présente un corps d'outil (20) formé par une plaque latérale, que l'organe de travail (12b') est disposé dans l'espace (10 ; 210) libre résultant de l'écartement (10 ; 210) mentionné entre les unités de corps d'outil (20', 20'' ; 220', 220''), conjointement avec au moins un des éléments que sont la deuxième branche (12), la deuxième poignée (222), le mécanisme (30) de transmission de force et de mouvement et que dans au moins une des unités de corps d'outil, il est prévu un orifice (134c ; 242') dont les dimensions perpendiculairement à la direction longitudinale du corps d'outil sont telles qu'un axe (43 ; 242) fixé dans la deuxième poignée (22 ; 222) peut traverser ledit orifice sans obstacle dans n'importe quelle position de pivotement de cette poignée.

2. Outil selon la revendication 1, **caractérisé** en ce que le mécanisme mentionné est formé par un axe (43) qui relie la deuxième poignée (22 ; 222) directement à la deuxième branche ou deuxième élément de branche (12).

3. Outil selon la revendication 1 ou 2, **caractérisé** en ce qu'il est pourvu d'un dispositif permettant de réajuster la position d'une branche ou d'un élément de branche (212).

4. Outil selon la revendication 3, **caractérisé** en ce qu'un axe traversant une branche ou un élément de branche, comme l'axe (43) qui forme le mécanisme mentionné, présente une partie centrale (43') excentrée et qu'il est prévu un dispositif de fixation (43a) pour fixer la position de rotation de cet axe.

5. Outil selon la revendication 3, **caractérisé** en ce que la deuxième branche (12) est divisée en deux parties (12a, 12b) d'une manière connue en soi par une fente (12') allongée et ouverte à une extrémité, l'une (12b) des parties étant montée sur ressort et portant l'organe de travail et le point de raccordement (134a) avec la deuxième poignée (22) se trouvant sur la deuxième partie (12a).

6. Outil selon l'une ou plusieurs des revendications précédentes, dans lequel chaque unité de corps d'outil est composée d'un seul corps d'outil et la deuxième branche (12) est disposée dans l'espace (10) libre mentionné, **caractérisé** en ce que la deuxième poignée (22) est formée de deux plaques latérales (22', 22'') et celles-ci sont disposées le long des faces extérieures des plaques latérales formant les corps d'outil.

7. Outil selon l'une ou plusieurs des revendications précédentes, **caractérisé** en ce que pour que les éléments que sont la deuxième branche (12), le corps d'outil (20), la deuxième poignée (22) puissent interagir sans obstacle dans toutes les positions de pivotement les uns par rapport aux autres, l'un des orifices (131a, 131b, 134a, 134b) que traversent l'axe (42 ; 242) au point de raccordement (H) de la deuxième poignée (22 ; 222) et/ou l'axe (41) au point de pivotement (S) des branches, est allongé.

8. Outil selon l'une ou plusieurs des revendications 1 à 5 avec des unités de corps d'outil (220', 220'') comportant chacune deux corps d'outil et avec une deuxième poignée (222) disposée dans l'espace libre entre lesdits corps et un mécanisme de transmission de force et de mouvement, **caractérisé** en ce que dans chaque unité de corps d'outil (220', 220''), un corps d'outil comporte le premier élément de branche (211) et un bras (211') en forme de manche et le deuxième corps d'outil comporte le deuxième élément de branche (212) et un bras (212') en forme de manche, les bras des deux corps d'outil étant, à leurs extrémités (211'a, 212'a) arrière libres, articulés ensemble en une unité de corps d'outil au moyen d'un axe (241) formant le point de pivotement (S) de branches et tous les bras formant dans les deux unités de corps d'outil la première poignée (221) de l'outil (200).

9. Outil selon la revendication 8, **caractérisé** en ce que le mécanisme (30) mentionné comprend une articulation sphérique plate.

10. Outil selon l'une ou plusieurs des revendications précédentes, **caractérisé** en ce que les branches ou éléments de branches sont disposé(e)s de telle manière que des surfaces de travail tournées l'une vers l'autre des organes de travail (12b', 16a) disposés dans le premier élément de branche et dans la deuxième branche ou le deuxième élément de branche s'étendent exactement parallèlement entre elles à un écartement (A) mutuel choisi qui correspond à une valeur moyenne escomptée des objets travaillés et est supérieur à zéro et inférieur à l'écartement mutuel maximal.

# Fig. 1

# Fig. 2

# Fig. 6

Fig.3

Fig. 4

Fig. 5